# EUROPEAN PATENT APPLICATION

(11) **EP 2 242 292 A1**
(43) Date of publication of application: **20.10.2010**
(21) Application number: 09158121.5
(22) Date of filing: 17.04.2009
(51) Int. Cl.: H04W 8/18, G06Q 30/00

(54) **collecting and associating data**

(71) Applicant: Sics, Swedish Institute Of Computer Science AB, 164 29 Kista (SE)
(72) Inventor: Bylund, Markus, 75591, UPPSALA (SE); Svee, Eric, 12247, ENSKEDE (SE); Sanches, Pedro, 17237, SUNDBYBERG (SE)
(74) Representative: Karlsson, Leif Karl Gunnar

(57) **Abstract**

The present invention relates to a method and system for collecting human migration data into a database (1), comprising the steps of receiving (A) information regarding the spatial movement, here called a path, or stationary position, here called a station, of a mobile device (3) in a communication network (2), from the same communication network, and associating (B) information or a sequence of information that represents a path or a station, here called a signal (11), with previously collected specific information (12) regarding an individual (4) associated with the mobile device (3). The inventive method specifically comprises the steps of de-identifying (C) the information by deleting all information 11a, 12a that can uniquely identify the mobile device (3) or the individual (4) from the signal (11) and from the specific information (12), and storing (D) the signal (11) together with the specific information (12) in the database (1), the signal (11) and personal information (12) thus being associated with each other and stored without any information (11a, 12a) that can uniquely identify the mobile device (3) or the individual (4).

## Description

### Field of invention

The present invention relates to a method and system for collecting human migration data into a database, comprising received information regarding the spatial movement, here called a path, or stationary position, here called a station, of a mobile device in a communication network from the communication network, and associating information or a sequence of information that represents a path or a station, here called a signal, with previously collected specific information regarding an individual associated with the mobile device.

### Description of background art

There are well-known means to track individuals' movements by means of tracking a device that is used by the individual, such as tracking the physical movements of a mobile telephone through the telecommunications network or tracking the virtual movements of an individual on the Internet by means of an IP address.

Such information is very important and a powerful tool in research concerning human migration and can be used in different fields, such as: Societal interests
- Urban and rural planning (e,g., real-time traffic information and road/transit planning).
- Environmental modelling (e.g., calculating energy consumption and CO2 emissions).
- Optimizing location dependent services (e.g., planning for new, or managing existing, hospitals and schools),
   Commercial interests
- Marketing and Advertising.
- Customer profiling,
- Business planning (e.g., when deciding whether and where to establish new businesses).
   Research interests
- Modelling the spread of diseases.
- Spatial diffusion of innovations (e.g. innovation as a series of diffusion waves, whose passage could be mapped, modelled, simulated, and conditionally predicted).
- Collective Intelligence.

### Interests of recreation, lifestyle, and entertainment.

Collected data is processed to discover patterns: in real-time, through post-processing, or through a combination thereof.
- Patterns are recognized through common pattern matching techniques, for instance data mining.
- Patterns can be recognized in real-time for immediate service delivery.
- Patterns can also be sought in retrospect through post-processing, where customers are interested in extracting migration patterns.

When it comes to different ways of determining the location of a mobile device it is previously known to use cellular telephony based location detection, or GSM localisation.

Typically, one can distinguish between three types of localization systems:
- handset based: where the positioning is carried out on the handset and then sent back to the network;
- hybrid: where the handset makes all the measurements necessary for the positioning and sends these to a network server, where the positioning is effectively calculated. No positioning is stored on the handset;
- network based: where the network calculates the position information with no help from the handset.

Techniques to obtain positioning information vary independently of the place where the calculation is done. Examples of these techniques include:
- trilateration : where the distance of the individual to at least three nearby base stations is calculated through the measurement of signal strength or, alternatively, the time of arrival of the signal from all the base stations. The localization is finally obtained by intersecting the area of each one of the user/base station distance circles. A more general technique is called multilateration, where the difference of the arrival time between three or more base stations is used instead;
- triangulation: uses angles of arrival, i.e.: reception angle of the signal coming from at least three nearby base stations;
- dead reckoning: estimates the position using previous positions, speed, acceleration, direction of movement, and time;
- proximity sensing: where the localization is obtained using the coordinates of the base station where the user client is connected. This base station can be represented by a unique signature combining several parameters; and
- polling: location data is requested from the user client by the network.

Patent publications and US 2009/0005972 A1 and US 2007/0281712 A1 are examples of prior art that derive user location through the use of mobile telephones.

Some of the computational methods used to obtain localization of users that are the most computationally "cheap" involve looking at the user's history of recently visited base stations and, from that, generating fingerprints of places, which are themselves then used to predict the geographic location of the handset.

It is also known to use similar approaches in other wireless technologies, particularly WiFiA/WiMax.

A great deal of prior art exists in the areas of automobile traffic monitoring and planning. There are also several commercial products which use mobile telephones to identify vehicles, thereby deriving information for route optimization, disaster planning, direct advertising, along with other applications.

Examples of this can be found in patent publications US 6 882 930 B2, US 6 587 781 82, US 6 810 321 B1, US 2006/0293046 A1, US 2006/0235833 A1, and US 2008/0091518 A1.

Many attempts at preserving privacy include means to anonymise user data, as exemplified in patent publications WO/2004/090697, US 721303282, US 2002/0091650 A1, and US 6 496 931 B1.

As a means to ensure privacy, many approaches include creating homogenised profiles that are based on characteristics of the user. Some of these are created for real-world environments while others are intended for virtual worlds, as exemplified by patent publication US 6 983 379 B1.

### Summary of the present invention

### Problems

It is a problem to collect and use information associated with an individual while maintaining the privacy of that individual.

Privacy has been repeatedly addressed in prior work, both in those with explicit location-based solutions as well as general data obfuscation. Many of the proposed solutions to this problem look at ways to mask individuals, without creating true privacy, It would be similar to going to a party with a mask on - people see you, but don't know your name. This is anonymity, but not necessarily privacy, and such solutions are always sensitive to attempts to broach this secrecy. One such example are inference attacks, where data mining is performed and the resulting data analyzed in order to legitimately gain knowledge about a subject or database.

It is important to understand that anonymised data is still uniquely connected to an individual or object and that different methods of tracking anonymised data enables an intruder to follow an individual through the anonymised data even if the true identity is not revealed. Methods of combining information from different sets of information can also lead back to revealing the true identity of the anonymised individual.

It is thus a problem to collect and manage great amounts of information associated with an individual without putting this individual in a situation where this information can be misused and lead back to the individual.

### Solution

With the purpose of solving one or more of the above indicated problems, and from the standpoint of the collecting of information as shown in the field of invention above, it is proposed that the information is de-identified by deleting all information that can uniquely identify the mobile device or the individual from the signal and from the specific information, and that the signal is stored together with the specific information in the database. Thus the signal and personal information being associated with each other are stored without any information that can uniquely identify the mobile device or the individual.

If the specific information comprises at least two types of information then post-processing steps are available for combinations of different types of information and different signals.

The specific information can be demographic information, where the different types of information can be, for instance, gender, age, marital status, home address, work address, education, or income.

The specific information can also be personal information, where the different types of information can be, for instance, personal interests, personal taste in music or literature, or preferred kind of food,

It is possible to manage the signal and specific information with maintained identity of the signal because the information is de-identified before the final storage of the information. However, for the purpose of ensuring the privacy of the individual it is proposed that the signal is collected by the operator or provider of the communication network, and that the operator or service provider in the communication network, or a third party, replaces identity of the mobile device with an anonymised identifier before the receipt of the signal, or if the signal is received without anonymisation, that the signal is anonymised as a step of the invention before any processing of the signal.

For the same reason, it is proposed that the collected specific information regarding an individual associated with the mobile device is anonymised as it is collected, either externally or as a step of the invention.

Anonymisation of the signal and the specific information can be performed in different ways; one proposed way is that the signal and the specific information are anonymised through a one-way hash function, and that they are anonymised so that they can be associated with each other.

The present invention can be applied to different kinds of mobile devices within different kinds of communication networks. It is proposed that the communication network can be a wireless telecommunication network, and that the mobile device is a mobile telephone. The communication network can also be a wide area network, such as the Internet, and the mobile device can be a mobile computer. It is also proposed that the communication network is a network for digital financial transactions, and that the mobile device is a payment card, such as a credit card.

The present invention is not restricted to one type of mobile device so it should be understood that one individual can be associated with several different mobile devices and that signals from the different mobile devices could be combined and saved in the same database,

These different mobile devices may also belong to the same or different communication networks.

### Advantages

The present invention targets human, not vehicular, movement. An individual does not equal a vehicle since several individuals may ride in the same vehicle, as in the case of buses, or trains.

The invention traces human movement with regard to paths and stations, not ways, roads, or segments thereof. A path does not equal a way, road, or segment thereof since a path can also represent for example a foot path, bike trail, railroad, or flight route. In fact, a path is not necessary related to geography at all.

All information that uniquely links signals to individuals, anonymised or not, is removed. In contrast to techniques trying to enforce privacy using anonymity or pseudonymity based on one-time hash functions, this dramatically enhances the invention since privacy violations are not theoretically conceivable.

The invention enriches traces of human movement with demographic data, without comprising the privacy of individuals.

The most common difference between the invention and prior art is the idea that very interesting and powerful data can be discovered by looking at aggregations of human mobility data. There are no prior art examples where data collected on the individual level is aggregated, anonymised and then used to discover common points of interest, common methods of transportation, etc.

Much of the work in ubiquitous computing falls out of scope; the invention does not attempt to predict nor deliver service offerings to the user. While activity inference is a broader term that captures what the data can be used for, the common usage found in the ubicomp world does not apply in this case. Other terms are experience sampling, decision theory and activity recognition.

The invention makes it possible to explore interesting locations, discovering those places which have some sort of significance to the individuals.

### Brief description of the drawings

A method and a system according to the present invention will now be described in detail with reference to the accompanying drawings, in which;
Figure 1 is a schematic and simplified illustration of a method and system according to the present invention,
Figure 2 is a schematic and simplified illustration of an embodiment for anonymisation of information,
Figure 3 is a schematic and simplified illustration of an alternative embodiment for anonymisation of information, and
Figure 4 is a schematic and simplified illustration of the present invention where information is collected from several different communication networks.

### Description of embodiments as presently preferred

The invention will now be described using a telephony network as an example of the communication network; however it should be understood that different kinds of communication networks can be used to gather information according to the present invention.

Detailed human migration statistics can be generated using information from two subsystems of cellular telephony service providers: telephony network and customer data management. In the initial step, information from the telephony network is used to detail the movement patterns of individuals with a mobile telephone. Next, demographic information from the customer data management subsystem enriches the initial data, with the final step being de-identification of the entire data set.

The information from the telephony network subsystem details the connections between the mobile telephone and the various network base stations. When a network base station hands over the responsibility of an individual's mobile telephone to another base station, a handover occurs. A sequence of handovers, possibly in combination with other cellular telephony signalling characteristics such as mobile telephone power on or off, radio signal strength, etc., can be used to determine whether an individual is moving or not, as well as for characterising the path the individual takes. In the case the individual is not moving, the station whose coverage the mobile telephone stayed within can be determined. The information characterising a path or a station is referred to as a signal.

Once a signal is created, it is annotated with demographic information about the individual held within the customer data management subsystem. This annotated signal is then stored in a separate database or streamed for real-time use.

At this stage, a large number of post-processing steps are conceivable:
- clustering identical or similar signals,
- linking signals to traces (paths) or places (stations);
- classifying signals with regard to transportation methods, e.g., walking, biking, flying, or travelling by car, train or boat; and
- classifying signals with regard to context, e.g., shopping mall, beach, work site, domestic, rural, and urban.

An explicit goal of the invention is to ensure individual privacy, Therefore, the final product of the invention contains no references to individuals, not as anonymous in the simplest sense or as explicitly identifiable, However, while generating the statistics, individually identifiable data is processed. A number of steps for ensuring the integrity of this process are conceivable. Salient points may include:
- All data processing is managed by the cellular telephony service providers within their secured networks. This data is already being produced and processed by the network providers; it is being processed in a novel and unique manner by the present invention, where the individually identifiable information is not stored.
- It is proposed that during processing, data used to map signals onto demographic data, typically a subscriber identifier, is replaced with an identifier that cannot be used to identify the individual, for example, using a one-way hash function.
- After processing, signals thus annotated with different types of demographic information are stored separately, thereby reducing the risk of inference attacks on the produced statistics.

The components of this exemplifying embodiment of the present invention are a telephony network subsystem of cellular telephony service providers, customer data management subsystem of cellular telephony service providers, and user clients.

The inventive methods implemented in this exemplifying embodiment include configuration of telephony network subsystem to retain handover information and other cellular telephony signalling characteristics, data processing algorithms to detect signals representing motion, paths, and stations, and data processing algorithms to map signals to demographic information while simultaneously de-identifying the original customer.

The invention according to this embodiment relies on handover data and other cellular telephony signalling characteristics that is uniquely produced by, and already partially exists within, the cellular telephony networks. While the invention does not rely on data from GPS, WiFi, Bluetooth or other, similar sensor technologies, it does not exclude their eventual use either.

The invention is passive, receiving data and processing it afterwards. It does not rely on requesting data from user events, referred to in prior art as "polling".

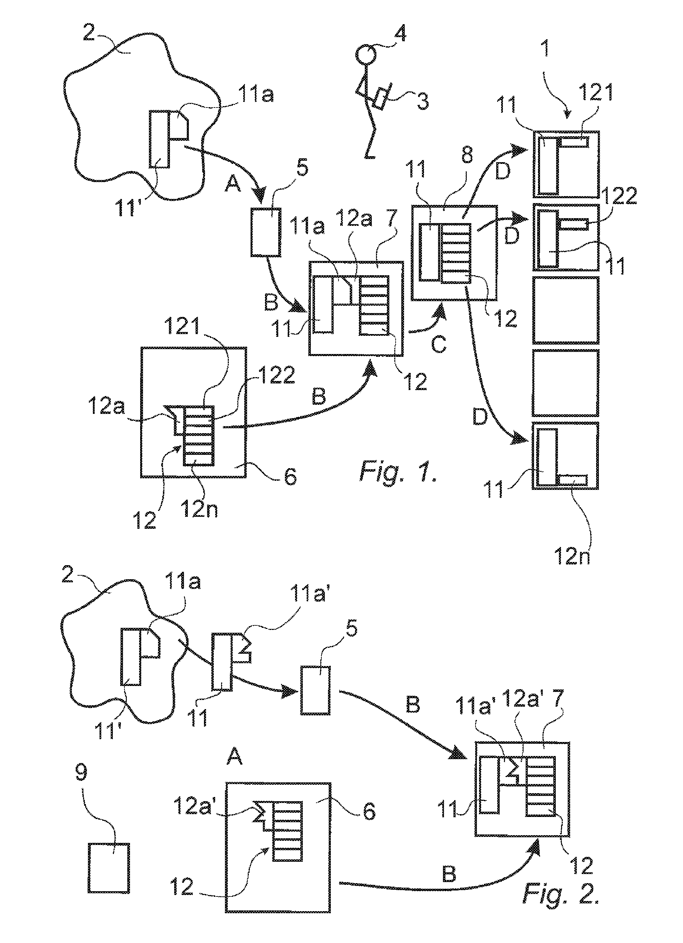

The invention will now be described in more general terms with reference to figure 1.

An inventive method for collecting human migration data into a database 1 comprises:
- receiving A information 11' regarding the spatial movement, here called a path, or stationary position, here called a station, of a mobile device 3 in a communication network 2, from the same communication network 2, and
- associating B information 11' or a sequence of information 11' that represents a path or a station, here called a signal 11, with previously collected specific information 12 regarding an individual 4 associated with the mobile device 3.

The present invention specifically comprises the steps of:
- de-identifying C the information 11, 12 by deleting all information 11 a, 12a that can uniquely identify the mobile device 3 or the individual 4 from the signal 11 and from the specific information 12, and
- storing D the signal 11 together with the specific information 12 in the database 1,
   the signal 11 and personal information 12 thus being associated with each other and stored without any information 11a, 12a that can uniquely identify the mobile device 3 or the individual 4.

It should be understood that the transformation of the available information 11; in the communication network 2 into a signal 11. that is the transformation of information regarding a spatial movement into a path and information regarding a stationary position into a station, can be performed either before receipt of the information or by the invention after receipt of the information. For the sake of simplicity, the different embodiments of the invention are illustrated in the figures with information 11' in the network 2 and with a signal 11 outside of the network 2. However, it should be understood that the invention is not limited to where and by whom this transformation is done and it is well known how to perform such a transformation.

The specific information 12 regarding the individual 4 can be only one single type of information, such as an identity, so that the signal can be associated with an individuals However, it is also possible that the specific information 12 comprises at least two types of information 121, 122, ..., 12n, thus making the post-processing steps available for combinations of different types of information and different signals 11.

The specific information 12 can be demographic information, where the different types of information 121, 122, ..., 12n can be gender, age, marital status, home address, work address, education, or income. The specific information 12 can also be personal information, where the different types of information 121, 122, ..., 12n can be personal interests, personal taste in music or literature, or preferred kind of food.

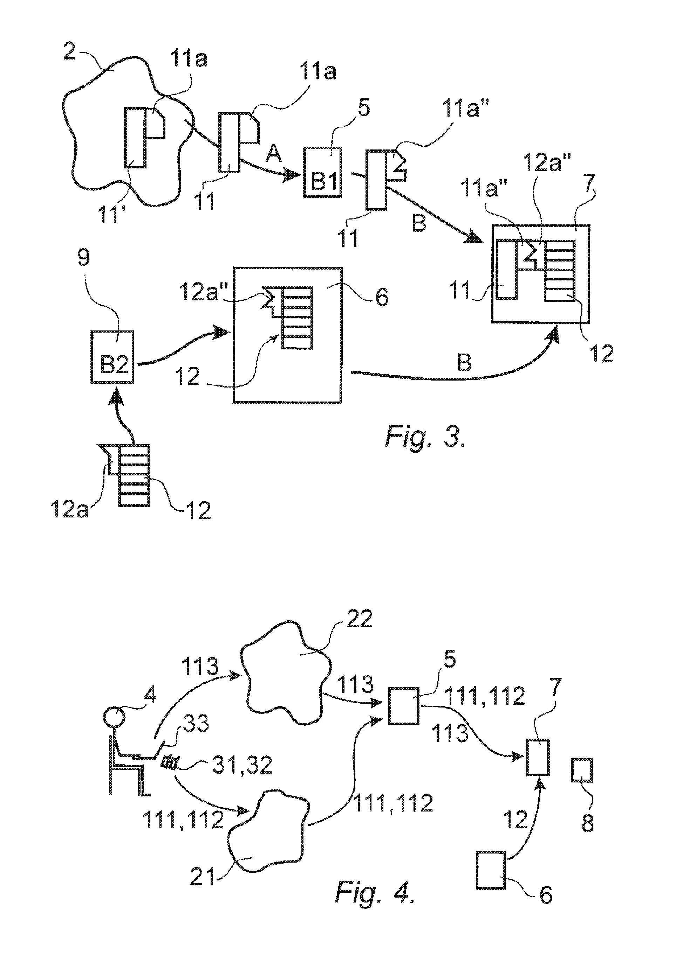

The received signal 11 and the specific information 12 can be directly associated with the mobile device 3 and the individual 4 respectively without any kind of anonymisation since all information is de-identified C by the inventive method before final storage D of the signal 11 and specific information 12. However, to fulfil requirements that providers of information might have, or that the individuals might have, figure 2 illustrates that the signal 11 is collected by the operator or provider of the communication network 2, and that the identity 11 a of the mobile device 4 is replaced with an anonymised identifier 11 a' by the operator or provider before sending the signal 11 for further processing according to the inventive method. Figure 3 illustrates that the inventive method can also include a step B1 of anonymising the signal 11 after receipt of the signal 11 and before any other processing of the signal 11 where the signal 11 with the identity 11 a of the mobile device 3 is received A and where the identity 11 a is replaced B1 with an anonymised identity 11a".

It is equally important that the individual is safe regarding the specific information 12 so the invention proposes that the collected specific information 12 regarding an individual 4 associated with the mobile device 3 is anonymised as it is collected. As shown in the exemplifying embodiment above, while this information can be collected from a customer data management system related to the communication network, the information can also be collected from any other information provider and the invention is not dependent on how this information is gathered. The information can thus be anonymised as it is collected 12a', as illustrated in figure 2, it can be anonymised later 12a" as a step B2 of the present invention, as illustrated in figure 3, or it might not be anonymised at all 12a, as illustrated in figure 1, simply deleted before storing the final result as it is de-identified.

If the anonymisation step B1, B2 is part of the present invention then it is possible to anonymise the signal 11 and the specific information 12 through a one-way hash function. In doing this, the present invention teaches that they are anonymised so that they can be associated B with each other, for instance by means of mapping the anonymised signal and specific information to each other.

In the previously shown exemplifying embodiment the communication network 2 is a wireless telecommunication network, and the mobile device 3 is a mobile telephone. It should be clear that the invention is not limited to this kind of communication network or mobile device. Figure 4 shows that the communication network can be a telecommunications network 21 and the mobile device a mobile telephone 31. It can also be for instance a wide area network 22, such as the Internet, where the mobile device could be a mobile computer 33, or a network for digital financial transactions, where the mobile device could be a payment card, such as a credit card.

It is also possible, as illustrated in figure 4, that that one individual 4 can be associated with several different mobile devices 31, 32, 33 and that signals 111, 112, 113 from the different mobile devices 31, 32, 33 are combined and stored in the same database 1. Two different mobile devices, here illustrated as mobile telephones 31, 32 belong to the same communication network 21, for instance the same telecommunications network, and that another mobile device, here illustrated as a mobile computer 33 belongs to a different communication network 22, for instance the wide area communication network Internee.

A system according to the present invention will now be described with renewed reference to figure 1, the system comprising a database 1 for human migration, a receiving unit 5 adapted to receive information 11 regarding the spatial movement, here called a path, or stationary position, here called a station, of a mobile device 3 in a communication network 2, from the same communication network 2, a storage unit 6 for the storing of previously collected specific information 12 regarding an individual 4 associated with the mobile device 3, and an associating unit 7 adapted to associate information or a sequence of information that represents a path or a station, here called a signal 11, with the specific information 12 regarding the individual.

The present invention specifically teaches that the associating unit 7 is adapted to de-identify the information by deleting all information 11 a, 12a that can uniquely identify the mobile device 3 or the individual 4 from the signal 11 and from the specific information 12 after having made the association, and that the system comprises a storing unit 8 adapted to store the signal 11 together with the specific information 12 in the database 1, the signal 11 and personal information 12 thus being associated with each other and stored without any information that can uniquely identify the mobile device 3 or the individual 4.

The storage 6 unit can be adapted to store at least two types of specific information 121, 122, ..., 12n, and the storing unit 8 is adapted to store the signal 11 and the different types of specific information 121, 122, ..., 12n in the database 1 so that post-processing steps are available for combinations of different types of information and different signals, The figure shows an example with several types of information 121, 122, ..., 12n.

The specific information 12 can be demographic information, where the different types of information can be gender, age, marital status, home address, work address, education, or income.

The specific information 12 can also be personal information, where the different types of information can be personal interests, personal taste in music or literature, or preferred kind of food.

Figure 3 shows that the receiving unit 5 can be adapted to receive a signal 11 that has been collected by the operator or provider of the communication network 2 and the receiving unit 5 can then be adapted to replace the identity 11 a of the mobile device 3 with an anonymised identifier 11 a" before further processing of the signal 11.

Figure 3 also shows that the system may comprise a collecting unit 9 adapted to collect the specific information 12 regarding the individual 4 associated with the mobile device 3 and to anonymise the collected specific information 12, 12a" before it is stored in the storage unit 6.

One possible way for the receiving unit 5 and the collecting unit 9 to anonymise the information is that they are adapted to anonymise the signal 11 and the specific information 12 through a one-way hash function, and that they are anonymised so that the associating unit 7 is able to associate them with each other, for instance by means of a mapping function.

As illustrated in figure 2 it is also possible that the receiving unit 5 is adapted to receive a signal 11 that has been collected by the operator or provider of the communication network 2, where the identity of the mobile device 11 a has been replaced with an anonymised identifier 11a' before the reception of the signal by the receding unit 5.

In the same way the collecting unit 9 can be adapted to collect the specific information 12 regarding the individual associated with the mobile device where the collected specific information 12 has been anonymised 12a' before it is collected by the collecting unit 9.

Also in this latter embodiment it is proposed that the associating unit 7 is adapted to associate the anonymised signal 11 with the anonymised specific information 12, for instance by means of a mapping function.

With renewed reference to figure 4 it is shown that the receiving unit 5 can be adapted to receive information from different kinds of communication networks 21, 22, it can for instance be adapted to receive information from a communication network that is a wireless telecommunication network 21, where the mobile device is a mobile telephone 31, from a communication network that is a wide area network 22, such as the Internet, where the mobile device is a mobile computer 33, or from a communication network that is a network for digital financial transactions, where the mobile device is a payment card, such as a credit card.

To collect data from several different moving devises 31, 32, 33 it is proposed that the associating unit 7 is adapted to associate one individual 4 with several different mobile devices 31, 32, 33 and that the storing unit 8 is adapted to combine and store signals from the different mobile devices 31, 32, 33 in the same database 1. It is also proposed that the receiving unit 5 is adapted to receive signals 111, 113 from the same 21 or different 22 communication networks related to different mobile devices 31, 32, 33.

It will be understood that the invention is not restricted to the aforedescribed and illustrated exemplifying embodiments thereof and that medications can be made within the scope of the inventive concept as illustrated in the accompanying Claims.

## Claims

1. Method for collecting human migration data into a database, comprising:
- receiving information regarding the spatial movement, here called a path, or stationary position, here called a station, of a mobile device in a communication network, from the same communication network: and
- associating information or a sequence of information that represents a path or a station, here called a signal with previously collected specific information regarding an individual associated with the mobile device, **characterised by**,
- de-identifying the information by deleting all information that can uniquely identify the mobile device or the individual from the signal and from the specific information; and
- storing the signal together with the specific information in the database, the signal and personal information thus being associated with each other and stored without any information that can uniquely identify the mobile device or the individual.

2. Method according to claim 1, **characterised in, that** the specific information comprises at least two types of information, and that post-processing steps are available for combinations of different types of information and different signals.

3. Method according to claim 2, **characterised in, that** the specific information is demographic information, where the different types of information can be gender, age, marital status, home address, work address, education, or income.

4. Method according to claim 2 or 3, **characterised in, that** the specific information is personal information, where the different types of information can be personal interests, personal taste in music or literature, or preferred kind of food.

5. Method according to any preceding claim, **characterised in, that** information is received from mobile devices in different kinds of communication networks.

6. Method according to claim 5, **characterised in, that** the communication network is a wireless telecommunication network, and that the mobile device is a mobile telephone, or that the communication network is a wide area network, such as the Internet, and that the mobile device is a mobile computer, or that the communication network is a network for digital financial transactions, and that the mobile device is a payment card, such as a credit card.

7. Method according to any preceding claim, **characterised in, that** one individual is associated with several different mobile devices and that signals from the different mobile devices are combined and stored in the same database,

8. Method according to claims 5 to 7, **characterised in, that** the different mobile devices belong to the same or different communication networks.

9. System comprising a database for human migration, a receiving unit adapted to receive information regarding the spatial movement, here called a path, or stationary position, here called a station, of a mobile device in a communication network, from the same communication network, a storage unit for the storing of previously collected specific information regarding an individual associated with the mobile device, and an associating unit adapted to associate information or a sequence of information that represents a path or a station, here called a signal, with the specific information regarding the individual, **characterised in, that** the associating unit is adapted to de-identify the information by deleting all information that can uniquely identify the mobile device or the individual from the signal and from the specific information after having made the association, and that the system comprises a storing unit adapted to store the signal together with the specific information in the database, the signal and personal information thus being associated with each other and stored without any information that can uniquely identify the mobile device or the individual.

10. System according to claim 9, **characterised in, that** the storage unit is adapted to store at least two types of specific information, and that the storing unit is adapted to store the signal and the different types of specific information in the database so that post-processing steps are available for combinations of different types of information and different signals.

11. System according to claim 10, **characterised in, that** the specific information is demographic information, where the different types of information can be gender, age, marital status, home address, work address, education, or income.

12. System according to claim 10 or 11, **characterised in, that** the specific information is personal information, where the different types of information can be personal interests, personal taste in music or literature, or preferred kind of food.

13. System according to any one of claim 9 to 12, **characterised in, that** the receiving unit is adapted to receive information from mobile devices in different kinds of communication networks.

14. System according to claim 13, **characterised in, that** the communication network is a wireless telecommunication network, where the mobile device is a mobile telephone, or that the communication network is a wide area network, such as the Internet, where the mobile device is a mobile computer, or that the communication network is a network for digital financial transactions, and that the mobile device is a payment card, such as a credit card.

15. System according to any one of claims 9 to 14, **characterised in, that** the associating unit is adapted to associate one individual with several different mobile devices and that the storing unit is adapted to combine and store signals from the different mobile devices in the same database.

16. System according to claims 13 to 15, **characterised in, that** the receiving unit is adapted to receive signals from the same or different communication networks related to different mobile devices.
